# EUROPEAN PATENT APPLICATION

(11) **EP 4 598 200 A1**
(43) Date of publication of application: **06.08.2025**
(21) Application number: 23870611.3
(22) Date of filing: 22.09.2023
(51) Int. Cl.: H04W 72/12

(54) **DCI ANALYSIS METHOD AND APPARATUS, DYNAMIC WAVEFORM SWITCHING DETERMINATION METHOD, UPLINK RECEIVING DETERMINATION METHOD, TERMINAL AND NETWORK SIDE DEVICE**

(30) Priority: 29.09.2022 CN 202211204131
(71) Applicant: Vivo Mobile Communication Co., Ltd., Dongguan, Guangdong 523863 (CN)
(72) Inventor: WU, Kai, Dongguan, Guangdong 523863 (CN); TAMRAKAR, Rakesh, Dongguan, Guangdong 523863 (CN); GU, Yi, Dongguan, Guangdong 523863 (CN); JI, Zichao, Dongguan, Guangdong 523863 (CN)
(74) Representative: Conti, Marco
(86) International application number: PCT/CN2023/120571
(87) International publication number: WO 2024/067379

(57) **Abstract**

This application discloses a DCI parsing method, a dynamic waveform switching determining method, an uplink receiving determining method, an apparatus, a terminal, and a network-side device, and pertains to the field of communication technologies. The DCI parsing method in an embodiment of this application includes: receiving, by a terminal, a first DCI from a network-side device, where the first DCI is used to schedule a first physical uplink shared channel PUSCH, and the terminal is a terminal with dynamic waveform switching capability or a terminal with dynamic waveform switching capability enabled; parsing, by the terminal, the first DCI according to a first preset rule; and determining, by the terminal, a transmission position of the first PUSCH based on a parsing result of the first DCI.

## Description

### CROSS-REFERENCE TO RELATED APPLICATIONS

This application claims priority to Chinese Patent Application No.202211204131.2, filed in China on September 29, 2022, which is incorporated herein by reference in its entirety.

### TECHNICAL FIELD

This application pertains to the field of communication technologies, and specifically, relates to a DCI parsing method, a dynamic waveform switching determining method, an uplink receiving determining method, an apparatus, a terminal, and a network-side device.

### BACKGROUND

In related arts, waveform switching (waveform switching) is implemented in a semi-static mode, which is relatively limited and cannot effectively improve the transmission performance of the terminal and the network-side device. Based on this, a dynamic waveform switching mode is proposed, which is an uplink enhancement technology where the terminal can select an appropriate waveform for transmission under corresponding channel state conditions. However, it is not yet clear how the terminal should perform related operations under the dynamic waveform switching mode, which causes the terminal to be unable to accurately perform the related operations involved in dynamic waveform switching.

### SUMMARY

Embodiments of this application provide a DCI parsing method, a dynamic waveform switching determining method, an uplink receiving determining method, a terminal, and a network-side device, which can solve the problem that the terminal cannot accurately perform the related operations involved in dynamic waveform switching mode due to the unclear method of how the terminal should perform related operations under dynamic waveform switching.

According to a first aspect, a DCI parsing method is provided, where the method includes:
receiving, by a terminal, a first DCI from a network-side device, where the first DCI is used to schedule a first physical uplink shared channel PUSCH, and the terminal is a terminal with dynamic waveform switching capability or a terminal with dynamic waveform switching capability enabled;
parsing, by the terminal, the first DCI according to a first preset rule; and
determining, by the terminal, a transmission position of the first PUSCH based on a parsing result of the first DCI.

According to a second aspect, a DCI parsing apparatus is provided, applied to a terminal, where the terminal is a terminal with dynamic waveform switching capability or a terminal with dynamic waveform switching capability enabled, the apparatus including:
a receiving module, configured to receive a first DCI from a network-side device, where the first DCI is used to schedule a first physical uplink shared channel PUSCH;
a parsing module, configured to parse the first DCI according to a first preset rule; and
a first determining module, configured to determine a transmission position of the first PUSCH based on a parsing result of the first DCI.

According to a third aspect, a dynamic waveform switching determining method is provided, where the method includes:
receiving, by a terminal, first configuration information from a network-side device, where the first configuration information is used to configure PI/2 binary phase shift keying BPSK modulation, and the terminal is a terminal with dynamic waveform switching capability or a terminal with dynamic waveform switching capability enabled; and
determining, by the terminal according to a preset rule, whether to support dynamic waveform switching.

According to a fourth aspect, a dynamic waveform switching determining apparatus is provided, applied to a terminal, where the terminal is a terminal with dynamic waveform switching capability or a terminal with dynamic waveform switching capability enabled, the apparatus including:
a receiving module, configured to receive first configuration information from a network-side device, where the first configuration information is used to configure PI/2 binary phase shift keying BPSK modulation; and
a determining module, configured to determine, according to a preset rule, whether to support dynamic waveform switching.

According to a fifth aspect, an uplink receiving determining method is provided, where the method includes:
transmitting, by a network-side device, a first DCI to a terminal, where the first DCI is used to schedule a first PUSCH, and the terminal is a terminal with dynamic waveform switching capability or a terminal with dynamic waveform switching capability enabled; and
determining, by the network-side device, a reception position of the first PUSCH according to a first preset rule.

According to a sixth aspect, an uplink receiving determining apparatus is provided, applied to a network-side device, where the apparatus includes:
a first transmitting module, configured to transmit a first DCI to a terminal, where the first DCI is used to schedule a first PUSCH, and the terminal is a terminal with dynamic waveform switching capability or a terminal with dynamic waveform switching capability enabled; and
a first determining module, configured to determine, according to a first preset rule, a reception position of the first PUSCH.

According to a seventh aspect, a dynamic waveform switching determining method is provided, where the method includes:
transmitting, by a network-side device, first configuration information to a terminal, where the first configuration information is used to configure PI/2 binary phase shift keying BPSK modulation, and the terminal is a terminal with dynamic waveform switching capability or a terminal with dynamic waveform switching capability enabled; and
determining, by the network-side device according to a preset rule, whether the terminal supports dynamic waveform switching.

According to an eighth aspect, a dynamic waveform switching determining apparatus is provided, applied to a network-side device, where the apparatus includes:
a transmitting module, configured to transmit first configuration information to a terminal, where the first configuration information is used to configure PI/2 binary phase shift keying BPSK modulation, and the terminal is a terminal with dynamic waveform switching capability or a terminal with dynamic waveform switching capability enabled; and
a determining module, configured to determine, according to a preset rule, whether the terminal supports dynamic waveform switching.

According to a ninth aspect, a terminal is provided, where the terminal is a terminal with dynamic waveform switching capability or a terminal with dynamic waveform switching capability enabled, where the terminal includes a processor and a memory, and the memory stores a program or an instruction capable of running on the processor. When the program or the instruction is executed by the processor, the steps of the method according to the first aspect are implemented, or the steps of the method according to the third aspect are implemented.

According to a tenth aspect, a terminal is provided, where the terminal is a terminal with dynamic waveform switching capability or a terminal with dynamic waveform switching capability enabled, and the terminal includes a processor and a communication interface, where the communication interface is used to receive a first DCI from a network-side device, and the first DCI is used to schedule a first physical uplink shared channel PUSCH; and the processor is configured to parse the first DCI according to a first preset rule and determine a transmission position of the first PUSCH based on a parsing result of the first DCI.

According to an eleventh aspect, a terminal is provided, where the terminal is a terminal with dynamic waveform switching capability or a terminal with dynamic waveform switching capability enabled, and the terminal includes a processor and a communication interface, where the communication interface is used to receive first configuration information from a network-side device, and the first configuration information is used to configure PI/2 binary phase shift keying BPSK modulation; and the processor is configured to determine, according to a preset rule, whether to support dynamic waveform switching.

According to a twelfth aspect, a network-side device is provided. The network-side device includes a processor and a memory, and the memory stores a program or an instruction capable of running on the processor. When the program or the instruction is executed by the processor, the steps of the method according to the fifth aspect are implemented, or the steps of the method according to the seventh aspect are implemented.

According to a thirteenth aspect, a network-side device is provided, including a processor and a communication interface, where the communication interface is used to transmit a first DCI to a terminal, where the first DCI is used to schedule a first PUSCH, and the terminal is a terminal with dynamic waveform switching capability or a terminal with dynamic waveform switching capability enabled; and the processor is configured to determine a reception position of the first PUSCH according to a first preset rule.

According to a fourteenth aspect, a network-side device is provided, including a processor and a communication interface, where the communication interface is used to transmit first configuration information to a terminal, and the first configuration information is used to configure PI/2 binary phase shift keying BPSK modulation, and the terminal is a terminal with dynamic waveform switching capability or a terminal with dynamic waveform switching capability enabled; and the processor is configured to determine, according to a preset rule, whether the terminal supports dynamic waveform switching.

According to a fifteen aspect, a communication system is provided, including a terminal and a network-side device. The terminal may be configured to execute the steps of the method according to the first aspect, and the network-side device may be configured to execute the steps of the method according to the fifth aspect; or, the terminal may be configured to execute the steps of the method according to the third aspect, and the network-side device may be configured to execute the steps of the method according to the seventh aspect.

According to a sixteenth aspect, a readable storage medium is provided, where the readable storage medium stores a program or instruction, and when the program or instruction is executed by a processor, the steps of the method according to the first aspect are implemented, the steps of the method according to the third aspect are implemented, the steps of the method according to the fifth aspect are implemented, or the steps of the method according to the seventh aspect are implemented.

According to a seventeen aspect, a chip is provided, where the chip includes a processor and a communication interface, the communication interface is coupled to the processor, and the processor is configured to run a program or instruction to implement the method according to the first aspect, the method according to the third aspect, the method according to the fifth aspect, or the method according to the seventh aspect.

According to an eighteen aspect, a computer program/program product is provided, where the computer program/program product is stored in a storage medium, the computer program/program product is executed by at least one processor to implement the steps of the method according to the first aspect, the steps of the method according to the third aspect, the steps of the method according to the fifth aspect, or the steps of the method according to the seventh aspect.

In the embodiments of this application, in a case that the dynamic waveform switching capability of the terminal is enabled, the terminal can accurately parse the downlink control information (Downlink Control Information, DCI) transmitted by the network-side device according to a preset rule. Thus, the terminal can, based on the parsing result of the DCI, accurately determine the transmission position of the physical uplink shared channel (Physical Uplink Shared Channel, PUSCH) scheduled by the DCI.

### BRIEF DESCRIPTION OF DRAWINGS

FIG. 1 is a block diagram of a wireless communication system to which embodiments of this application are applicable;
FIG. 2 is a flowchart of a DCI parsing method according to an embodiment of this application;
FIG. 3 is a structural diagram of a DCI parsing apparatus according to an embodiment of this application;
FIG. 4 is a flowchart of a dynamic waveform switching determining method according to an embodiment of this application;
FIG. 5 is a structural diagram of a dynamic waveform switching determining apparatus according to an embodiment of this application;
FIG. 6 is a flowchart of an uplink receiving determining method according to an embodiment of this application;
FIG. 7 is a structural diagram of an uplink receiving determining apparatus according to an embodiment of this application;
FIG. 8 is a flowchart of a dynamic waveform switching determining method according to an embodiment of this application;
FIG. 9 is a structural diagram of a dynamic waveform switching determining apparatus according to an embodiment of this application;
FIG. 10 is a structural diagram of a communication device according to an embodiment of this application;
FIG. 11 is a schematic diagram of a hardware structure of a terminal according to an embodiment of this application; and
FIG. 12 is a structural schematic diagram of a hardware structure of a network device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

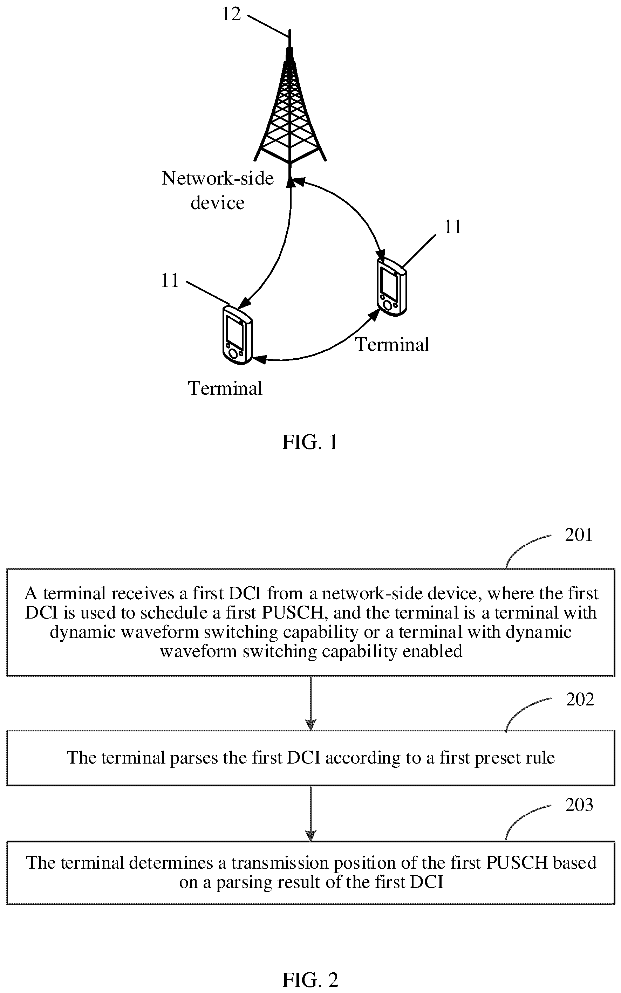

FIG. 1 is a block diagram of a wireless communication system to which the embodiments of this application can be applied. The wireless communication system includes a terminal 11 and a network-side device 12. The terminal 11 may be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the terminal 11 is not limited to a specific type in the embodiments of this application. The network-side device 12 may include an access network device or a core network device. The access network device may also be referred to as a radio access network device, a radio access network (Radio Access Network, RAN), a radio access network function, or a radio access network unit. The access network device may include base stations, wireless local area network (Wireless Local Area Network, WLAN) access points, wireless fidelity (Wireless Fidelity, WiFi) nodes, or the like. The base station may be referred to as Node B, evolved Node B (Evolved Node B, eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

Dynamic waveform switching is an important uplink enhancement technology. When dynamic waveform switching capability of a terminal is enabled, the terminal can dynamically switch between a cyclic prefix-orthogonal frequency division multiplex (Cyclic Prefix-Orthogonal Frequency Division Multiplex, CP-OFDM) waveform and a discrete Fourier transform-s-orthogonal frequency division multiplex (Discrete Fourier Transform-s-Orthogonal Frequency Division Multiplex, DFT-s-OFDM) waveform. When the dynamic waveform switching capability of the terminal is enabled, the terminal can select an appropriate waveform for transmission under a corresponding channel state condition to improve transmission performance.

In the dynamic waveform switching scenario, it is crucial whether the transmission behavior between the terminal and the network-side device can remain consistent. For example, in the dynamic waveform switching scenario, whether a parsing method of a DCI changes, such as whether a DCI size changes, whether the parsing methods of different fields in the DCI change, and the like. For another example, whether PI/2 binary phase shift keying (Binary Phase Shift Keying, BPSK) (PI/2 BPSK or π/2-BPSK for short) modulation scheme is allowed in the dynamic waveform switching scenario. Currently, it is not clear how the terminal should perform related operations under the dynamic waveform switching method, which causes the terminal to be unable to accurately perform the related operations involved in dynamic waveform switching, resulting in inconsistent transmission behavior between the terminal and the network-side device.

In view of this, to better support dynamic waveform switching and keep the transmission behavior between the terminal and the network-side device consistent in the dynamic waveform switching scenario, embodiments of this application mainly provide various rules applicable to the dynamic waveform switching scenario, such as DCI parsing rules in the dynamic waveform switching scenario, and rules for whether dynamic waveform switching is supported under PI/2 BPSK modulation.

With reference to the accompanying drawings, the following describes in detail a DCI parsing method, a dynamic waveform switching determining method, an uplink receiving determining method, an apparatus, a terminal, and a network-side device provided in the embodiments of this application with some embodiments and application scenarios thereof.

Referring to FIG. 2, FIG. 2 is a flowchart of a DCI parsing method according to an embodiment of this application. As shown in FIG. 2, the DCI parsing method includes the following steps.

Step 201: A terminal receives a first DCI from a network-side device, where the first DCI is used to schedule a first PUSCH, and the terminal is a terminal with dynamic waveform switching capability or a terminal with dynamic waveform switching capability enabled.

Step 202: The terminal parses the first DCI according to a first preset rule.

Step 203: The terminal determines a transmission position of the first PUSCH based on a parsing result of the first DCI.

The DCI involved in the embodiments of this application may be DCI format 0_1 (that is, DCI format 0_1) or DCI format 0_2 for dynamically scheduling uplink PUSCH transmission, or it may be DCI format 0_1 or DCI format 0_2 for activating configured grant type 2 PUSCH (that is, for activating configured grant Type 2 PUSCH).

In the embodiments of this application, in a case that the dynamic waveform switching capability of the terminal is enabled, the terminal can accurately parse the DCI transmitted by the network-side device according to a preset rule. Thus, the terminal can accurately determine the transmission position of the PUSCH scheduled by the DCI based on the parsing result of the DCI, thereby enabling the transmission behaviors of the terminal and the network-side device to remain consistent in a dynamic waveform switching scenario. Specifically, the terminal can transmit the first PUSCH at an accurate position, and the network-side device can receive the first PUSCH at an accurate position.

In some embodiments, the first preset rule includes at least one of the following:
a rule corresponding to a waveform configured by radio resource control (Radio Resource Control, RRC);
a rule corresponding to a waveform used by the first PUSCH;
a rule corresponding to a waveform used by a second PUSCH, where the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

This implementation lists multiple rules that the terminal can follow to parse the DCI, and the above preset rules may be configured by the network-side device or agreed upon through a protocol.

In some embodiments, the parsing, by the terminal, the first DCI includes at least one of the following:
determining, by the terminal, a size of the first DCI;
in a case that a transmission mode of the first PUSCH is codebook-based transmission, determining, by the terminal, a table corresponding to the first DCI and used for indicating a transmitted precoding matrix indicator (Transmitted Precoding Matrix Indicator, TPMI) or the number of antenna ports;
determining, by the terminal, a size of a phase-tracking reference signal-demodulation reference signal (Phase-tracking reference signal-Demodulation Reference Signal, PTRS-DMRS) association field in the first DCI; and
determining, by the terminal, a size of a DMRS sequence initialization field in the first DCI.

This implementation lists multiple aspects involved in DCI parsing, and each of the above aspects may be configured by the network-side device or agreed upon through a protocol.

It should be noted that the multiple rules that the terminal can follow to parse the DCI listed in the two aforementioned implementations, as well as the multiple aspects involved in DCI parsing, can be implemented in any combination, and the specific combination method may be configured by the network-side device or agreed upon through a protocol.

In some embodiments, in a case that a DCI size does not change with waveform switching, the determining, by the terminal, a size of the first DCI includes at least one of the following:
determining, by the terminal, the size of the first DCI based on a waveform configured by RRC;
determining, by the terminal, the size of the first DCI based on a waveform used by the first PUSCH; and
determining, by the terminal, the size of the first DCI based on a waveform used by the second PUSCH, where the second PUSCH is a PUSCH before scheduling of the first DCI;

In some embodiments, in a case that a DCI size does not change with waveform switching, the determining, by the terminal, a size of the first DCI includes:
determining, by the terminal, the size of the first DCI based on a maximum value in DCI sizes corresponding to different waveforms.

In some embodiments, in a case that the size of the first DCI is smaller than the maximum value, the method further includes:
padding, by the terminal, zeros to the first DCI until the size of the first DCI reaches the maximum value.

In some embodiments, in a case that different waveforms or different waveform configurations correspond to different DCI formats, the determining, by the terminal, a size of the first DCI includes at least one of the following:
determining, by the terminal, the size of the first DCI based on a waveform corresponding to the DCI format of the first DCI; and
determining, by the terminal, the size of the first DCI based on a waveform configuration corresponding to the DCI format of the first DCI.

In some embodiments, in a case that the size of the first DCI or sizes of part of fields in the first DCI are determined by a second waveform, the determining, by the terminal, a size of the first DCI includes:
determining, by the terminal, the second waveform according to a second preset rule; and
determining, by the terminal, the size of the first DCI based on the second waveform; where
the second waveform is a waveform specified by the first DCI, or an actual waveform to which the terminal has switched.

In some embodiments, the determining, by the terminal, the second waveform according to a second preset rule includes at least one of the following:
determining, by the terminal, the second waveform based on a first field of the first DCI, where the first field is a pre-configured field for indicating the second waveform; and
blind-decoding, by the terminal, the first DCI to determine the second waveform.

In some embodiments, the method further includes:
in a case that the network-side device is configured with PI/2 BPSK modulation, determining, by the terminal according to a third preset rule, whether to support dynamic waveform switching.

In some embodiments, the determining, by the terminal according to a third preset rule, whether to support dynamic waveform switching includes at least one of the following:
determining, by the terminal, not to support dynamic waveform switching;
in a case that the network-side device is further configured with demodulation reference signal uplink transform precoding (that is, dmrs-UplinkTransformPrecoding), determining, by the terminal, to support dynamic waveform switching; and
in a case that the network-side device is further configured with dmrs-UplinkTransformPrecoding, determining, by the terminal, not to support dynamic waveform switching.

The above preset rules may be configured by the network-side device or agreed upon through a protocol.

In some embodiments, in a case that the terminal determines to support dynamic waveform switching, the method further includes:
in a case that a waveform of the first PUSCH is a discrete Fourier transform-s-orthogonal frequency division multiplexing DFT-s-OFDM waveform, transmitting, by the terminal, the first PUSCH using the PI/2 BPSK or a low peak to average power ratio (Peak to Average Power Ratio, PAPR) DMRS (that is, low PAPR DMRS).

For how the terminal parses DCI in a dynamic waveform switching scenario, multiple embodiments are provided below.

Embodiment 1: Determination of a DCI size (that is, DCI size) before and after waveform switching

The DCI size does not change before and after waveform switching (waveform switching), and the overall size of the DCI can be determined based on one or more of the following methods.

Method a: Determined by a waveform (waveform) configured by RRC. As an example, the method of configuring the waveform by RRC may include configuring the transmission waveform in a "PUSCH-config" signaling, or configuring the transmission waveform in a "RACH-ConfigCommon" signaling.

Method b: Determined by the waveform actually used by the PUSCH scheduled by the DCI (that is, determined by the waveform after the switching or the waveform indicated by the DCI). As an example, when a size (such as the number of rows) of a table (table) corresponding to the DCI does not change before and after waveform switching, it is determined by the waveform actually used by the PUSCH scheduled by the DCI; or, regardless of whether the size (such as the number of rows) of the table corresponding to the DCI changes, it is determined by the waveform actually used by the PUSCH scheduled by the DCI.

Method c: Determined by the waveform used by the PUSCH before the DCI scheduling. As an example, it is determined by the waveform used by the previous PUSCH.

Method d: The overall size of the DCI is determined by the largest DCI size under different waveforms. As an example, to align the DCI sizes, for waveforms with smaller DCI sizes, zero padding can be used to reach the maximum DCI size.

Embodiment 2: Determination of the table (table) before and after waveform switching

The NR system supports two PUSCH transmission methods: codebook based (codebook based) PUSCH transmission and non-codebook based (non-codebook based) PUSCH transmission. The network-side device can configure the terminal to use codebook-based or non-codebook-based PUSCH transmission method through RRC signaling. Currently, the NR system supports terminals with 1, 2, or 4 transmitting antennas. When the terminal supports only 1 antenna for transmission, there is no difference between codebook-based and non-codebook-based PUSCH transmission. In a case that the terminal supports more than 1 antenna for transmission, the network-side device can configure the terminal to use either the codebook-based transmission method or the non-codebook-based transmission method, and configure the corresponding sounding reference signal (Sounding Reference Signal, SRS).

To support the codebook-based transmission method, the network-side device can configure one or more multi-port SRS resources for the terminal. For example, if the terminal supports 2-antenna transmission, the network-side device configures one 2-port SRS resource for the terminal. At the same time, the network-side device configures the coherent codebook subset (coherent codebook subset) or non-coherent codebook subset (non-coherent codebook subset) according to the terminal capabilities. Since the terminal has 2 transmitting antennas, it supports up to 2 streams of transmission (rank=1 or rank=2). The terminal transmits SRS, and when scheduling the PUSCH, the network-side device, based on the SRS measurement, indicates through the DCI (such as DCI 0_1) a transmitted precoding matrix indicator (Transmitted Precoding Matrix Indicator, TPMI), a transmission rank (rank) jointly indicated with TPMI, and a precoding matrix used by the terminal for this PUSCH transmission.

For example, for DCI 0_1, the number of layers (layer) and the precoding matrix (precoding matrix) information(i.e.TPMI) are determined through the precoding information and number of layers field (that is, the "Precoding information and number of layers" field) and a series of tables (Table).

The selection of the table depends on some RRC parameter configurations, including whether the scheduled PUSCH has the transform precoder enabled (enabled transform precoder), that is, whether the DFT-s-OFDM waveform is used. For example, the selection of table a requires the transform precoder (transform precoder) to be enabled (enabled).

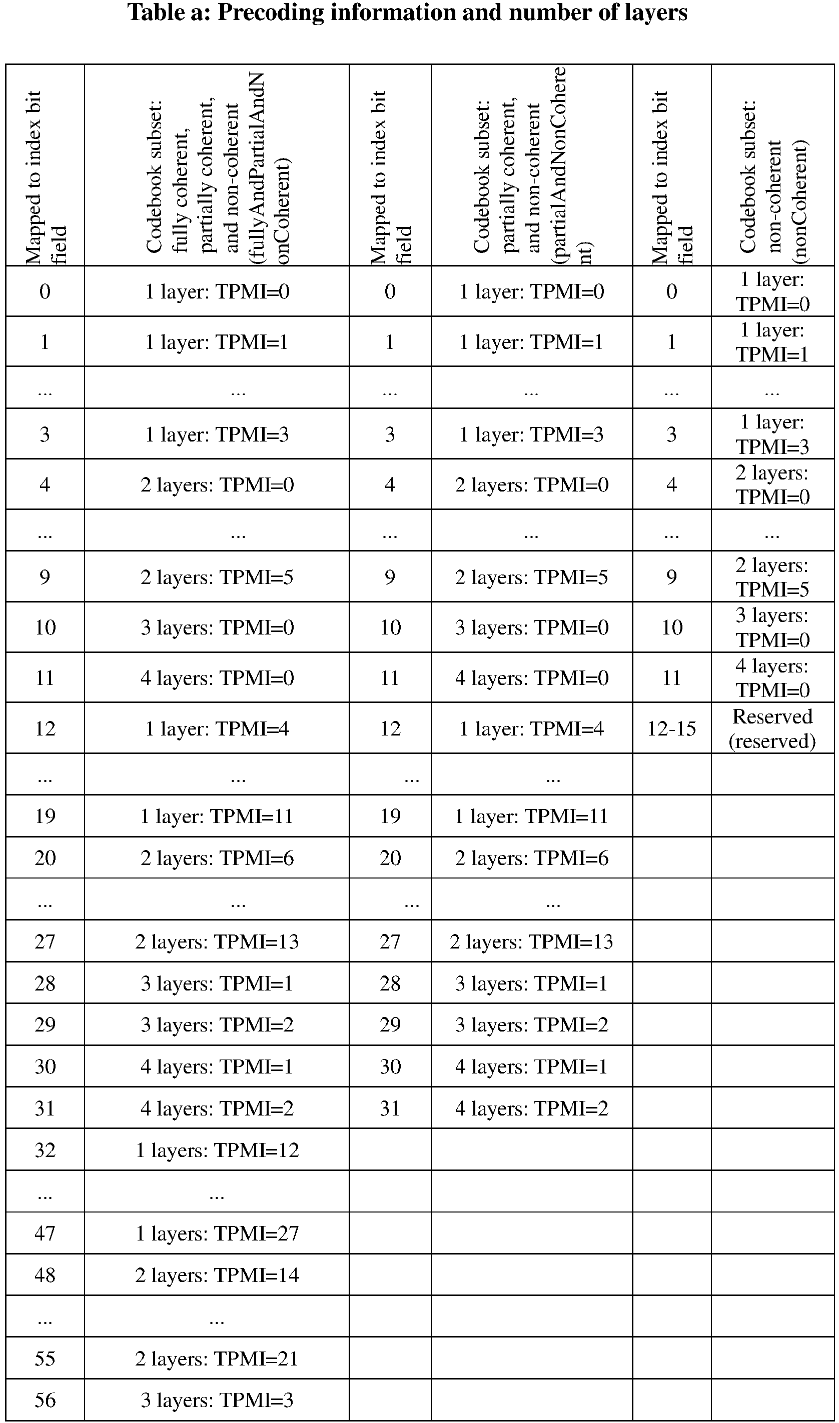

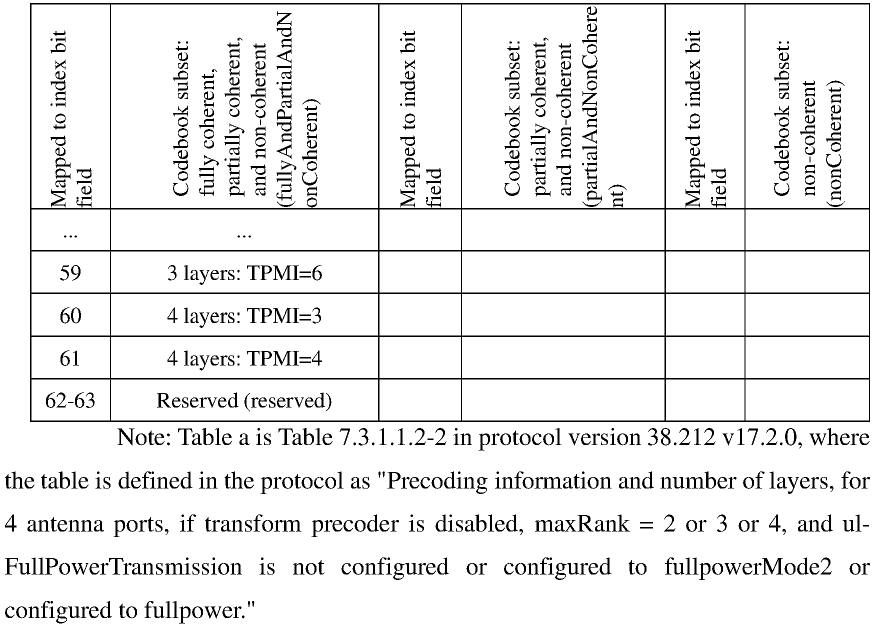

The selection of Table b also needs to consider the waveform, that is, whether the transform precoder is enabled. For example, the prerequisite for selecting table b is that the scheduled PUSCH uses the DFT-s-OFDM waveform, in other words, the transform precoder is enabled.

**Table b: Number of antenna ports**

| Value (Value) | Parameter "Number of DMRS CDM group(s) without data" | DMRS port(s) (port(s)) |
|---|---|---|
| 0 | 2 | 0 |
| 1 | 2 | 1 |
| 2 | 2 | 2 |
| 3 | 2 | 3 |

| | | |
|---|---|---|
| Note: Table b is Table 7.3.1.1.2-6 in protocol version 38.212 v17.2.0, where the table is defined in the protocol as "Antenna port(s), transform precoder is enabled, dmrs-Type=1, maxLength=1, except that dmrs-UplinkTransformPrecoding and tp-pi2BPSK are both configured and π/2-BPSK modulation is used." | | |

In this embodiment of this application, in a case that the PUSCH scheduled by the DCI is a codebook-based transmission scheme, the table (table) used to indicate the transmitted precoding matrix indicator (Transmitted Precoding Matrix Indicator, TPMI) or the number of antenna ports (that is, antenna ports) can be determined based on one or more of the following methods.

Method a: Determined by a waveform (waveform) configured by RRC. As an example, the method of configuring the waveform by RRC may include configuring the transmission waveform in a "PUSCH-config" signaling, or configuring the transmission waveform in a "RACH-ConfigCommon" signaling.

Method b: Determined by the waveform actually used by the PUSCH scheduled by the DCI (that is, determined by the waveform after the switching or the waveform indicated by the DCI). As an example, when a size (such as the number of rows) of a table (table) corresponding to the DCI does not change before and after waveform switching, it is determined by the waveform actually used by the PUSCH scheduled by the DCI; or, regardless of whether the size (such as the number of rows) of the table corresponding to the DCI changes, it is determined by the waveform actually used by the PUSCH scheduled by the DCI.

Method c: Determined by the waveform used by the PUSCH before the DCI scheduling. As an example, it is determined by the waveform used by the previous PUSCH.

Embodiment 3: Determination of the size of the phase tracking reference signal (Phase Tracking Reference Signal, PTRS) demodulation reference signal (Demodulation Reference Signal, DMRS) association field (that is, the "PTRS-DMRS association" field) before and after waveform switching.

In DCI0_1 or DCI0_2 scheduling the PUSCH, the "PTRS-DMRS association" field is used to indicate the association between the DM-RS and PT-RS ports (ports), and the size of this field may depend on the waveform used by the scheduled PUSCH. In this embodiment of this application, the size of the "PTRS-DMRS association" field may be determined based on one or more of the following methods.

Method a: Determined by a waveform (waveform) configured by RRC. As an example, the method of configuring the waveform by RRC may include configuring the transmission waveform in a "PUSCH-config" signaling, or configuring the transmission waveform in a "RACH-ConfigCommon" signaling.

Method b: Determined by the waveform actually used by the PUSCH scheduled by the DCI (that is, determined by the waveform after the switching or the waveform indicated by the DCI). As an example, when a size (such as the number of rows) of a table (table) corresponding to the DCI does not change before and after waveform switching, it is determined by the waveform actually used by the PUSCH scheduled by the DCI; or, regardless of whether the size (such as the number of rows) of the table corresponding to the DCI changes, it is determined by the waveform actually used by the PUSCH scheduled by the DCI.

Method c: Determined by the waveform used by the PUSCH before the DCI scheduling. As an example, it is determined by the waveform used by the previous PUSCH.

Embodiment 4: Determination of the size of the DMRS sequence initialization field (that is, "DMRS sequence initialization" field) before and after waveform switching

In DCI0_1 or DCI0_2 scheduling the PUSCH, the "DMRS sequence initialization" field is used to indicate the initialization value required for DMRS sequence generation, and the size of this field may depend on the waveform used by the scheduled PUSCH. In this embodiment of this application, the size of the "DMRS sequence initialization" field may be determined based on one or more of the following methods.

Method a: Determined by a waveform (waveform) configured by RRC. As an example, the method of configuring the waveform by RRC may include configuring the transmission waveform in a "PUSCH-config" signaling, or configuring the transmission waveform in a "RACH-ConfigCommon" signaling.

Method b: Determined by the waveform actually used by the PUSCH scheduled by the DCI (that is, determined by the waveform after the switching or the waveform indicated by the DCI). As an example, when a size (such as the number of rows) of a table (table) corresponding to the DCI does not change before and after waveform switching, it is determined by the waveform actually used by the PUSCH scheduled by the DCI; or, regardless of whether the size (such as the number of rows) of the table corresponding to the DCI changes, it is determined by the waveform actually used by the PUSCH scheduled by the DCI.

Method c: Determined by the waveform used by the PUSCH before the DCI scheduling. As an example, it is determined by the waveform used by the previous PUSCH.

Embodiment 5: Determination of waveform or waveform change information in a case that the size of the DCI or the sizes of part of the fields in the DCI are determined by the actual waveform after switching or the waveform specified by the DCI

Determination of waveform or waveform change information in a case that the size of the DCI or the sizes of part of the fields in the DCI are determined by the actual waveform after switching or the waveform specified by the DCI may be achieved based on one or more of the following methods.

Method a: The information for indicating the waveform is fixed at a certain position in the DCI. As an example, a waveform indication field or waveform change information indication field may be defined between "Frequency domain resource assignment" and "Identifier for DCI formats", so that the terminal can parse this position in advance to obtain waveform information or waveform change information before determining the DCI size.

Method b: The terminal blind-decodes the DCI size. Taking the DCI size under the CP-OFDM waveform and the DCI size under the DFT-s-OFDM waveform as examples, the terminal can first parse the DCI according to the DCI size under the CP-OFDM waveform. If the waveform information or waveform change information is successfully obtained, the determination of the waveform information or waveform change information is achieved. Otherwise, the terminal parses the DCI according to the DCI size under the DFT-s-OFDM waveform.

Embodiment 6: Different DCI formats correspond to different waveforms or different waveform configurations (or different waveforms or waveform configurations correspond to different DCI formats)

For example, through preconfiguration at a network-side device or a protocol agreement, DCI format 0_1 can be set to schedule CP-OFDM waveform and DCI format 0_2 can be set to schedule DFT-s-OFDM waveform. In this way, when the format of the DCI is DCI format 0_1, the terminal can determine that the waveform used by the PUSCH scheduled by the DCI is CP-OFDM; and when the format of the DCI is DCI format 0_2, the terminal can determine that the waveform used by the PUSCH scheduled by the DCI is DFT-s-OFDM.

For another example, through preconfiguration at a network-side device or a protocol agreement, specific waveform configurations can be defined for different DCI formats. As an example, the RRC configuration parameter "transformPrecoderDCI0_1" can be used to indicate the waveform used by the PUSCH scheduled by DCI0_1, and the RRC configuration parameter "transformPrecoderDCI0_2" can be used to indicate the waveform used by the PUSCH scheduled by DCI0_2. In this way, the terminal can determine the waveform used by the PUSCH scheduled by the DCI based on the RRC parameters.

It should be noted that since different DCI formats correspond to different waveforms or different waveform configurations, a waveform change may lead to a change in DCI size. In this case, it is not necessary to consider DCI size alignment.

The above are multiple embodiments regarding terminal parsing DCI in the dynamic waveform switching scenario.

For the uplink, in a case of using DFT precoding (DFT-s-OFDM waveform), PI/2 BPSK can be supported. This is to achieve a lower cubic metric (cubic metric) in uplink transmission, thereby improving power amplifier efficiency, especially suitable for scenarios with limited coverage. In related technologies, in the absence of DFT precoding (DFT-s-OFDM waveform), PI/2 BPSK is neither supported nor useful, and the network-side device does not involve the configuration of PI/2 BPSK because, in this case, the cubic metric is dominated by the CP-OFDM waveform.

In the dynamic waveform switching scenario, for the case that the network-side device is configured with PI/2 BPSK, as to whether the terminal supports waveform switching, multiple embodiments are provided below.

Embodiment 1: When the parameter "tp-pi2BPSK" exists, the terminal does not support dynamic waveform switching.

This embodiment mainly considers that in a case that PI/2 BPSK is configured, it is unnecessary to support CP-OFDM because, in the case of CP-OFDM, the cubic metric is still determined by CP-OFDM. Therefore, the terminal may not support dynamic waveform switching.

Embodiment 2: When both the parameter "dmrs-UplinkTransformPrecoding" and the parameter "tp-pi2BPSK" are configured, the terminal supports dynamic waveform switching.

This embodiment mainly considers that in a case that the cubic metric of the DMRS is reduced, or in a case that CP-OFDM can be enabled, the terminal can support dynamic switching between CP-OFDM and DFT-s-OFDM.

Embodiment 3: When both the parameter "dmrs-UplinkTransformPrecoding" and the parameter "tp-pi2BPSK" are configured, the terminal does not support dynamic waveform switching.

Embodiment 4: In a case that the RRC configures the PUSCH as CP-OFDM and the transform precoder is disabled (that is, transform precoder disabled), the parameter "tp-pi2BPSK" is allowed to exist and/or the parameter "dmrs-UplinkTransformPrecoding" is allowed to be configured. At this time, PI/2 BPSK and/or low PAPR DMRS can only be used when the scheduled PUSCH switches to DFT-s-OFDM.

This embodiment mainly considers that even if the RRC only configures the CP-OFDM waveform, in a case of supporting dynamic waveform switching, when the waveform dynamically switches to DFT-s-OFDM, the cubic metric can be further reduced through the configuration of PI/2 BPSK.

The above are multiple embodiments regarding whether the terminal supports waveform switching in a case that the network-side device is configured with PI/2 BPSK.

In summary, embodiments of this application propose various methods related to supporting dynamic waveform switching, making dynamic waveform switching possible, thereby improving the efficiency of uplink power usage in the system.

The DCI parsing method provided by the embodiments of this application may be executed by a DCI parsing apparatus. In the embodiments of this application, the DCI parsing method being performed by the DCI parsing apparatus is used as an example to describe the DCI parsing apparatus provided in the embodiments of this application.

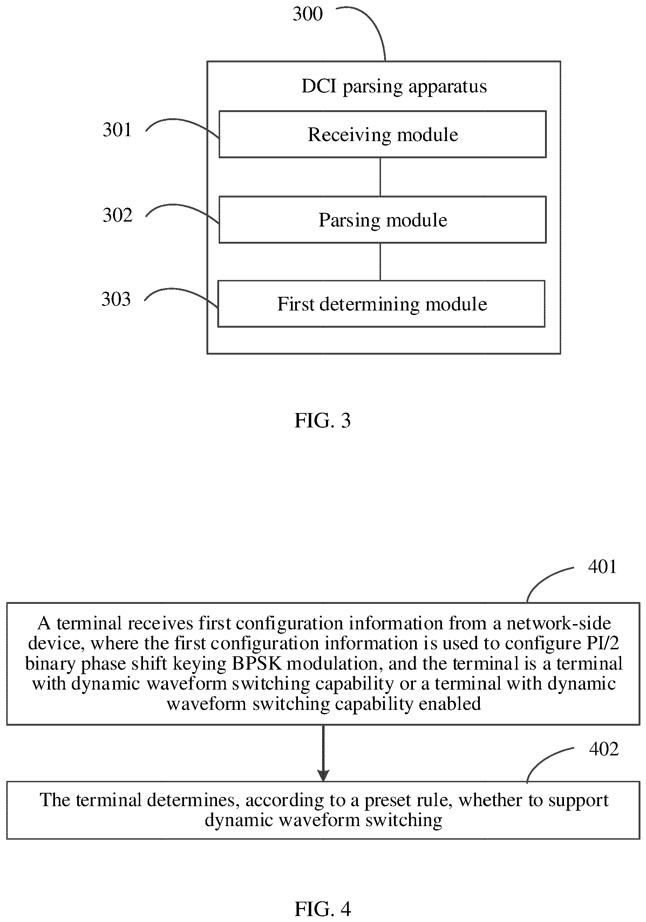

FIG. 3 is a structural diagram of a DCI parsing apparatus according to an embodiment of this application. The DCI parsing apparatus may be applied to a terminal, where the terminal is a terminal with dynamic waveform switching capability or a terminal with dynamic waveform switching capability enabled. As shown in FIG. 3, the DCI parsing apparatus 300 includes:
a receiving module 301, configured to receive a first DCI from a network-side device, where the first DCI is used to schedule a first physical uplink shared channel PUSCH;
a parsing module 302, configured to parse the first DCI according to a first preset rule; and
a first determining module 303, configured to determine a transmission position of the first PUSCH based on a parsing result of the first DCI.

Optionally, the first preset rule includes at least one of the following:
a rule corresponding to a waveform configured by radio resource control RRC;
a rule corresponding to a waveform used by the first PUSCH;
a rule corresponding to a waveform used by a second PUSCH, where the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

Optionally, the parsing module 302 is specifically configured for at least one of the following:
determining a size of the first DCI;
in a case that a transmission mode of the first PUSCH is codebook-based transmission, determining a table corresponding to the first DCI and used for indicating a transmitted precoding matrix indicator TPMI or the number of antenna ports;
determining a size of a phase tracking reference signal-demodulation reference signal PTRS-DMRS association field in the first DCI; and
determining a size of a DMRS sequence initialization field in the first DCI.

Optionally, in a case that a DCI size does not change with waveform switching, the parsing module 302 is specifically configured for at least one of the following:
determining the size of the first DCI based on a waveform configured by RRC;
determining the size of the first DCI based on a waveform used by the first PUSCH; and
determining the size of the first DCI based on a waveform used by the second PUSCH, where the second PUSCH is a PUSCH before scheduling of the first DCI;

Optionally, in a case that a DCI size does not change with waveform switching, the parsing module 302 is specifically configured for:
determining, by the terminal, the size of the first DCI based on a maximum value in DCI sizes corresponding to different waveforms.

Optionally, in a case that the size of the first DCI is smaller than the maximum value, the parsing module 302 is further configured for:
padding zeros to the first DCI until the size of the first DCI reaches the maximum value.

Optionally, in a case that different waveforms or different waveform configurations correspond to different DCI formats, the parsing module 302 is specifically configured for at least one of the following:
determining the size of the first DCI based on a waveform corresponding to the DCI format of the first DCI; and
determining the size of the first DCI based on a waveform configuration corresponding to the DCI format of the first DCI.

Optionally, in a case that the size of the first DCI or sizes of part of fields in the first DCI are determined by a second waveform, the parsing module 302 is specifically configured for:
determining the second waveform according to a second preset rule; and
determining the size of the first DCI based on the second waveform; where
the second waveform is a waveform specified by the first DCI, or an actual waveform to which the terminal has switched.

Optionally, the parsing module 302 is specifically configured for at least one of the following:
determining the second waveform based on a first field of the first DCI, where the first field is a pre-configured field for indicating the second waveform; and
blind-decoding the first DCI to determine the second waveform.

Optionally, the DCI parsing apparatus 300 further includes:
a second determining module, configured to, in a case that the network-side device is configured with PI/2 binary phase shift keying BPSK modulation, determine, according to a third preset rule, whether to support dynamic waveform switching.

Optionally, the second determining module is specifically configured for at least one of the following:
determining not to support dynamic waveform switching;
in a case that the network-side device is further configured with demodulation reference signal uplink transform precoding dmrs-UplinkTransformPrecoding, determining to support dynamic waveform switching; and
in a case that the network-side device is further configured with dmrs-UplinkTransformPrecoding, determining not to support dynamic waveform switching.

Optionally, in a case that the terminal determines to support dynamic waveform switching, the DCI parsing apparatus 300 further includes:
a transmitting module, configured to, in a case that a waveform of the first PUSCH is a discrete Fourier transform-s-orthogonal frequency division multiplexing DFT-s-OFDM waveform, transmit the first PUSCH using the PI/2 BPSK or a low peak-to-average power ratio PAPR DMRS.

In summary, embodiments of this application propose various methods related to supporting dynamic waveform switching, making dynamic waveform switching possible, thereby improving the efficiency of uplink power usage in the system.

The DCI parsing apparatus 300 in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The DCI parsing apparatus 300 provided in this embodiment of this application can implement the processes implemented in the method embodiments of FIG. 2, with the same technical effects achieved. To avoid repetition, details are not described herein again.

FIG. 4 is a flowchart of a dynamic waveform switching determining method according to an embodiment of this application; As shown in FIG. 4, the dynamic waveform switching determining method includes the following steps.

Step 401: A terminal receives first configuration information from a network-side device, where the first configuration information is used to configure PI/2 binary phase shift keying BPSK modulation, and the terminal is a terminal with dynamic waveform switching capability or a terminal with dynamic waveform switching capability enabled.

Step 402: The terminal determines, according to a preset rule, whether to support dynamic waveform switching.

Optionally, that the terminal determines, according to a preset rule, whether to support dynamic waveform switching includes at least one of the following:
determining, by the terminal, not to support dynamic waveform switching;
in a case that the network-side device is further configured with dmrs-UplinkTransformPrecoding, determining, by the terminal, to support dynamic waveform switching; and
in a case that the network-side device is further configured with dmrs-UplinkTransformPrecoding, determining, by the terminal, not to support dynamic waveform switching.

Optionally, in a case that the terminal determines to support dynamic waveform switching, the method further includes:
in a case that a waveform of the first PUSCH is a discrete Fourier transform-s-orthogonal frequency division multiplexing DFT-s-OFDM waveform, transmitting, by the terminal, the first PUSCH using the PI/2 BPSK or a low peak-to-average power ratio PAPR DMRS.

In summary, embodiments of this application propose various methods related to supporting dynamic waveform switching, making dynamic waveform switching possible, thereby improving the efficiency of uplink power usage in the system.

Relevant descriptions of the embodiments of this application can be found in the relevant descriptions of the method embodiments shown in FIG. 2, and the same beneficial effects can be achieved. To avoid repetition, details are not described herein again.

The dynamic waveform switching determining method provided in the embodiment of this application may be performed by a dynamic waveform switching determining apparatus. In the embodiments of this application, the dynamic waveform switching determining apparatus performing the dynamic waveform switching determining method is used as an example to describe the dynamic waveform switching determining apparatus provided in the embodiments of this application.

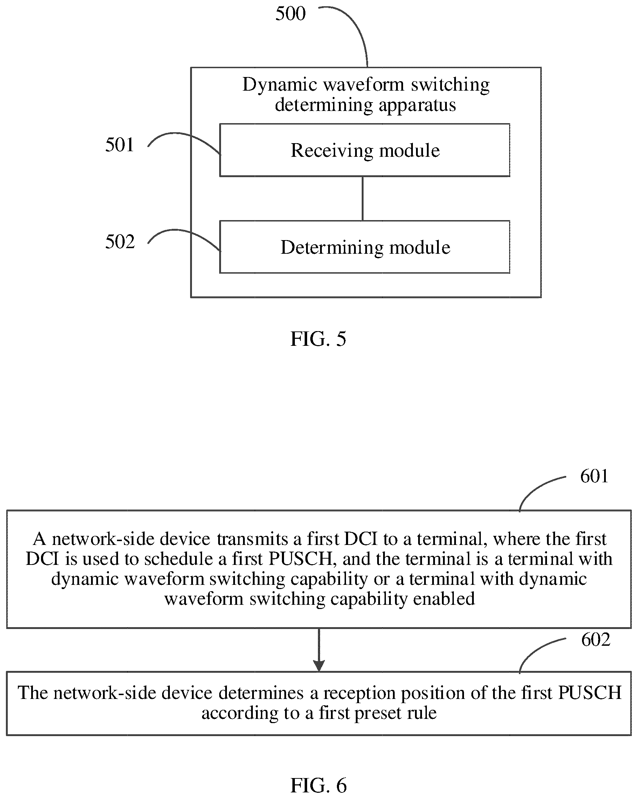

FIG. 5 is a structural diagram of a dynamic waveform switching determining apparatus according to an embodiment of this application. The dynamic waveform switching determining apparatus may be applied to a terminal, where the terminal is a terminal with dynamic waveform switching capability or a terminal with dynamic waveform switching capability enabled. As shown in FIG. 5, the dynamic waveform switching determining apparatus 500 includes:
a receiving module 501, configured to receive first configuration information from a network-side device, where the first configuration information is used to configure PI/2 binary phase shift keying BPSK modulation; and
a determining module 502, configured to determine, according to a preset rule, whether to support dynamic waveform switching.

Optionally, the determining module 502 is specifically configured for at least one of the following:
determining not to support dynamic waveform switching;
in a case that the network-side device is further configured with dmrs-UplinkTransformPrecoding, determining to support dynamic waveform switching; and
in a case that the network-side device is further configured with dmrs-UplinkTransformPrecoding, determining not to support dynamic waveform switching.

Optionally, the dynamic waveform switching determining apparatus 500 further includes a transmitting module.

In a case that the determining module 502 determines to support dynamic waveform switching, the transmitting module is configured to, in a case that a waveform of the first PUSCH is a discrete Fourier transform-s-orthogonal frequency division multiplexing DFT-s-OFDM waveform, transmit the first PUSCH using the PI/2 BPSK or a low peak-to-average power ratio PAPR DMRS.

In summary, embodiments of this application propose various methods related to supporting dynamic waveform switching, making dynamic waveform switching possible, thereby improving the efficiency of uplink power usage in the system.

The dynamic waveform switching determining apparatus 500 in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The dynamic waveform switching determining apparatus 500 provided in the embodiments of this application can implement the processes implemented in the method embodiment in FIG. 4, with the same technical effects achieved. To avoid repetition, details are not described herein again.

FIG. 6 is a flowchart of an uplink receiving determining method according to an embodiment of this application; As shown in FIG. 6, the uplink receiving determining method includes the following steps.

Step 601: A network-side device transmits a first DCI to a terminal, where the first DCI is used to schedule a first PUSCH, and the terminal is a terminal with dynamic waveform switching capability or a terminal with dynamic waveform switching capability enabled.

Step 602: The network-side device determines a reception position of the first PUSCH according to a first preset rule.

Optionally, the first preset rule includes at least one of the following:
a rule corresponding to a waveform configured by radio resource control RRC;
a rule corresponding to a waveform used by the first PUSCH;
a rule corresponding to a waveform used by a second PUSCH, where the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

Optionally, the method further includes:
transmitting, by the network-side device, first configuration information to the terminal, where the first configuration information is used to configure PI/2 binary phase shift keying BPSK modulation; and
determining, by the network-side device according to a third preset rule, whether the terminal supports dynamic waveform switching.

Optionally, the determining, by the network-side device according to a third preset rule, whether the terminal supports dynamic waveform switching includes at least one of the following:
determining, by the network-side device, that the terminal does not support dynamic waveform switching;
in a case that the network-side device is further configured with demodulation reference signal uplink transform precoding dmrs-UplinkTransformPrecoding, determining, by the network-side device, that the terminal supports dynamic waveform switching; and
in a case that the network-side device is further configured with dmrs-UplinkTransformPrecoding, determining, by the network-side device, that the terminal does not support dynamic waveform switching.

In summary, embodiments of this application propose various methods related to supporting dynamic waveform switching, making dynamic waveform switching possible, thereby improving the efficiency of uplink power usage in the system.

Relevant descriptions of the embodiments of this application can be found in the relevant descriptions of the method embodiments shown in FIG. 2, and the same beneficial effects can be achieved. To avoid repetition, details are not described herein again.

The uplink receiving determining method provided in this embodiment of this application can be executed by the uplink receiving determining apparatus. In the embodiments of this application, the uplink receiving determining apparatus performing the uplink receiving determining method is used as an example to describe the uplink receiving determining apparatus provided in the embodiments of this application.

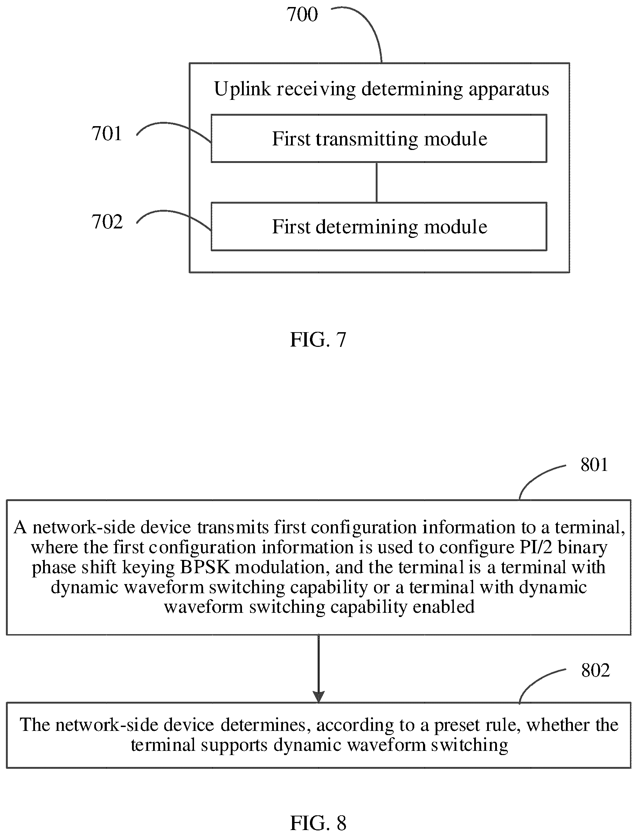

FIG. 7 is a structural diagram of an uplink receiving determining apparatus according to an embodiment of this application, where the uplink receiving determining apparatus can be applied to a network-side device. As shown in FIG. 7, the uplink receiving determining apparatus 700 includes:
a first transmitting module 701, configured to transmit a first DCI to a terminal, where the first DCI is used to schedule a first PUSCH, and the terminal is a terminal with dynamic waveform switching capability or a terminal with dynamic waveform switching capability enabled; and
a first determining module 702, configured to determine, according to a first preset rule, a reception position of the first PUSCH.

Optionally, the first preset rule includes at least one of the following:
a rule corresponding to a waveform configured by radio resource control RRC;
a rule corresponding to a waveform used by the first PUSCH;
a rule corresponding to a waveform used by a second PUSCH, where the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

Optionally, the uplink receiving determining apparatus 700 further includes:
a second transmitting module, configured to transmit the first configuration information to the terminal, where the first configuration information is used to configure PI/2 binary phase shift keying BPSK modulation; and
a second determining module, configured to determine, according to a third preset rule, whether the terminal supports dynamic waveform switching.

Optionally, the second determining module is specifically configured for at least one of the following:
determining that the terminal does not support dynamic waveform switching;
in a case that the network-side device is further configured with demodulation reference signal uplink transform precoding dmrs-UplinkTransformPrecoding, determining that the terminal supports dynamic waveform switching; and
in a case that the network-side device is further configured with dmrs-UplinkTransformPrecoding, determining that the terminal does not support dynamic waveform switching.

In summary, embodiments of this application propose various methods related to supporting dynamic waveform switching, making dynamic waveform switching possible, thereby improving the efficiency of uplink power usage in the system.

The uplink receiving determining apparatus 700 in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The uplink receiving determining apparatus 700 provided in this embodiment of this application can implement the processes implemented in the method embodiments of FIG. 6, with the same technical effects achieved. To avoid repetition, details are not described herein again.

FIG. 8 is a flowchart of a dynamic waveform switching determining method according to an embodiment of this application; As shown in FIG. 8, the dynamic waveform switching determining method includes the following steps.

Step 801: A network-side device transmits first configuration information to a terminal, where the first configuration information is used to configure PI/2 binary phase shift keying BPSK modulation, and the terminal is a terminal with dynamic waveform switching capability or a terminal with dynamic waveform switching capability enabled.

Step 802: The network-side device determines, according to a preset rule, whether the terminal supports dynamic waveform switching.

Optionally, that the network-side device determines, according to a preset rule, whether the terminal supports dynamic waveform switching includes at least one of the following:
determining, by the network-side device, that the terminal does not support dynamic waveform switching;
in a case that the network-side device is further configured with demodulation reference signal uplink transform precoding dmrs-UplinkTransformPrecoding, determining, by the network-side device, that the terminal supports dynamic waveform switching; and
in a case that the network-side device is further configured with dmrs-UplinkTransformPrecoding, determining, by the network-side device, that the terminal does not support dynamic waveform switching.

In summary, embodiments of this application propose various methods related to supporting dynamic waveform switching, making dynamic waveform switching possible, thereby improving the efficiency of uplink power usage in the system.

Relevant descriptions of the embodiments of this application can be found in the relevant descriptions of the method embodiments shown in FIG. 2, and the same beneficial effects can be achieved. To avoid repetition, details are not described herein again.

The dynamic waveform switching determining method provided in the embodiment of this application may be performed by a dynamic waveform switching determining apparatus. In the embodiments of this application, the dynamic waveform switching determining apparatus performing the dynamic waveform switching determining method is used as an example to describe the dynamic waveform switching determining apparatus provided in the embodiments of this application.

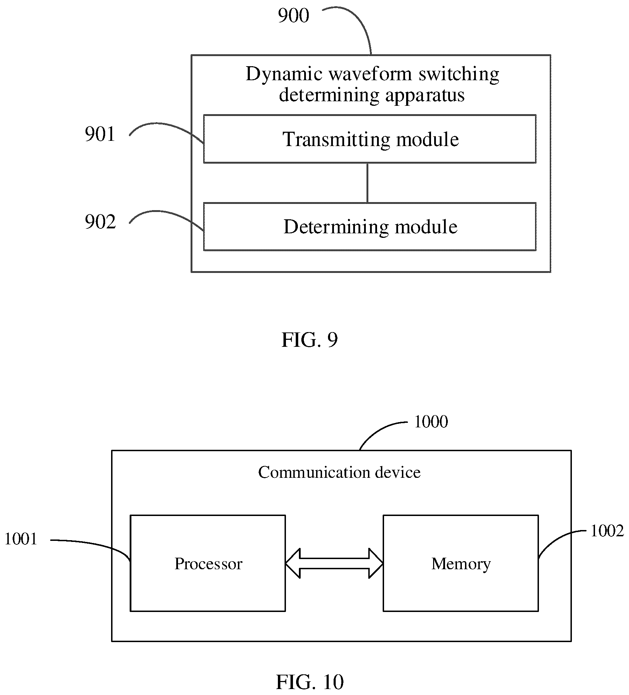

FIG. 9 is a structural diagram of a dynamic waveform switching determining apparatus according to an embodiment of this application, where the dynamic waveform switching determining apparatus can be applied to a network-side device. As shown in FIG. 9, the dynamic waveform switching determining apparatus 900 includes:
a transmitting module 901, configured to transmit first configuration information to a terminal, where the first configuration information is used to configure PI/2 binary phase shift keying BPSK modulation, and the terminal is a terminal with dynamic waveform switching capability or a terminal with dynamic waveform switching capability enabled; and
a determining module 902, configured to determine, according to a preset rule, whether the terminal supports dynamic waveform switching.

Optionally, the determining module 902 is specifically configured for at least one of the following:
determining that the terminal does not support dynamic waveform switching;
in a case that the network-side device is further configured with demodulation reference signal uplink transform precoding dmrs-UplinkTransformPrecoding, determining that the terminal supports dynamic waveform switching; and
in a case that the network-side device is further configured with dmrs-UplinkTransformPrecoding, determining that the terminal does not support dynamic waveform switching.

In summary, embodiments of this application propose various methods related to supporting dynamic waveform switching, making dynamic waveform switching possible, thereby improving the efficiency of uplink power usage in the system.

The dynamic waveform switching determining apparatus 900 in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The dynamic waveform switching determining apparatus 900 provided in this embodiment of this application can implement the processes implemented in the method embodiments of FIG. 8, with the same technical effects achieved. To avoid repetition, details are not described herein again.

Optionally, as shown in FIG. 10, an embodiment of this application further provides a communication device 1000 including a processor 1001 and a memory 1002. The memory 1002 stores a program or instruction executable on the processor 1001. For example, when the communication device 1000 is a terminal, the terminal is a terminal with dynamic waveform switching capability or a terminal with dynamic waveform switching capability enabled. When the program or instruction is executed by the processor 1001, the steps of the DCI parsing method embodiment described above are implemented, or the steps of the terminal-side dynamic waveform switching determining method embodiment described above are implemented, with the same technical effects achieved. When the communication device 1000 is a network-side device, the program or instruction is executed by the processor 1001 to implement the steps of the embodiment of the uplink receiving determining method described above, or the steps of the network-side dynamic waveform switching determining method embodiment described above, with the same technical effects achieved. To avoid repetition, details are not described herein again.

An embodiment of this application further provides a terminal, where the terminal is a terminal with dynamic waveform switching capability or a terminal with dynamic waveform switching capability enabled, and the terminal includes a processor and a communication interface, where the communication interface is used to receive a first DCI from a network-side device, and the first DCI is used to schedule a first physical uplink shared channel PUSCH; and the processor is configured to parse the first DCI according to a first preset rule and determine a transmission position of the first PUSCH based on a parsing result of the first DCI. This terminal embodiment corresponds to the foregoing DCI parsing method embodiment. All processes and implementations in the foregoing method embodiment are applicable to this terminal embodiment, with the same technical effect achieved.

An embodiment of this application further provides a terminal, where the terminal is a terminal with dynamic waveform switching capability or a terminal with dynamic waveform switching capability enabled, and the terminal includes a processor and a communication interface, where the communication interface is used to receive first configuration information from a network-side device, and the first configuration information is used to configure PI/2 binary phase shift keying BPSK modulation; and the processor is configured to determine, according to a preset rule, whether to support dynamic waveform switching. This terminal embodiment corresponds to the foregoing terminal-side dynamic waveform switching determining method embodiment. All processes and implementations in the foregoing method embodiment are applicable to this terminal embodiment, with the same technical effect achieved.

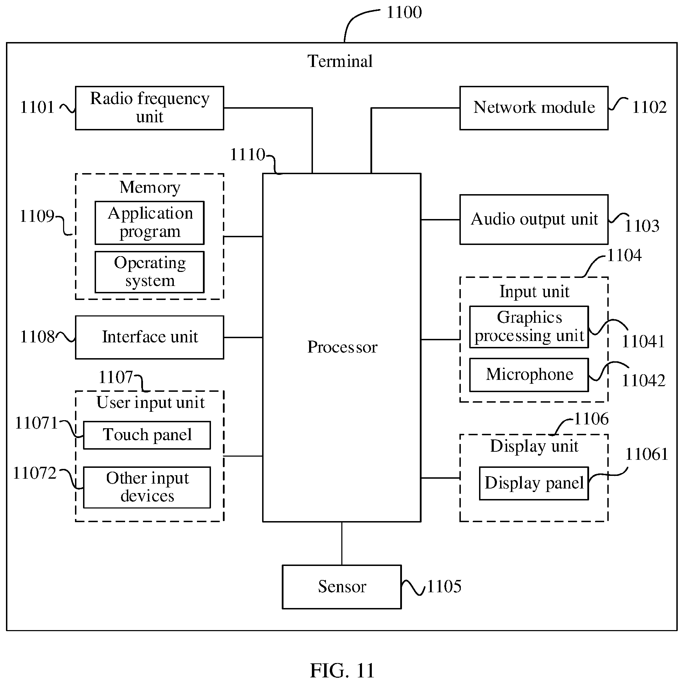

Specifically, FIG. 11 is a schematic diagram of a hardware structure of a terminal implementing the embodiments of this application.

The terminal 1100 includes but is not limited to at least part of these components: a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal, and the terminal may include more or fewer components than shown in the figure, or combine some of the components, or have different arrangements of the components. Details are not described herein.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (for example, a camera) in a video capture mode or an image capture mode. The display unit 1106 may include a display panel 11061, and the display panel 11061 may be configured in a form of a liquid crystal display, an organic light-emitting diode, and the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (for example, a volume control key or a power on/off key), a trackball, a mouse, a joystick, and the like. Details are not described herein.

In an embodiment of this application, the radio frequency unit 1101 receives downlink data from a network-side device and transmits the data to the processor 1110 for processing; and the radio frequency unit 1101 can additionally transmit uplink data to the network-side device. Generally, the radio frequency unit 1101 includes but is not limited to an antenna, an amplifier, a transceiver, a coupler, a low noise amplifier, a duplexer, and the like.

The memory 1109 may be adapted to store software programs or instructions and various data. The memory 1109 may include a first storage area for storing a program or instruction and second storage area for storing data. The first storage area may store an operating system, an application program or instructions required by at least one function (for example, sound play function or image play function), and the like. Additionally, the memory 1109 may be a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in the embodiments of this application includes but is not be limited to these or any other applicable types of memories.

The processor 1110 may include one or more processing units. Optionally, the processor 1110 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1110.

Among them, on the one hand, the radio frequency unit 1101 is configured to receive a first DCI from a network-side device, where the first DCI is used to schedule a first physical uplink shared channel PUSCH;

The processor 1110 is configured to parse the first DCI according to a first preset rule; and determine a transmission position of the first PUSCH based on a parsing result of the first DCI.

In the embodiments of this application, in a case that the dynamic waveform switching capability of the terminal is enabled, the terminal can accurately parse the DCI transmitted by the network-side device according to a preset rule. Thus, the terminal can accurately determine the transmission position of the PUSCH scheduled by the DCI based on the parsing result of the DCI, thereby enabling the transmission behaviors of the terminal and the network-side device to remain consistent in a dynamic waveform switching scenario. Specifically, the terminal can transmit the first PUSCH at an accurate position, and the network-side device can receive the first PUSCH at an accurate position.

Optionally, the first preset rule includes at least one of the following:
a rule corresponding to a waveform configured by radio resource control RRC;
a rule corresponding to a waveform used by the first PUSCH;
a rule corresponding to a waveform used by a second PUSCH, where the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

Optionally, the processor 1110 is further configured for at least one of the following:
determining a size of the first DCI;
in a case that a transmission mode of the first PUSCH is codebook-based transmission, determining a table corresponding to the first DCI and used for indicating a transmitted precoding matrix indicator TPMI or the number of antenna ports;
determining a size of a phase tracking reference signal-demodulation reference signal PTRS-DMRS association field in the first DCI; and
determining a size of a DMRS sequence initialization field in the first DCI.

Optionally, in a case that a DCI size does not change with waveform switching, the processor 1110 is further configured for at least one of the following:
determining the size of the first DCI based on a waveform configured by RRC;
determining the size of the first DCI based on a waveform used by the first PUSCH; and
determining the size of the first DCI based on a waveform used by the second PUSCH, where the second PUSCH is a PUSCH before scheduling of the first DCI;

Optionally, in a case that a DCI size does not change with waveform switching, the processor 1110 is further configured for:
determining the size of the first DCI based on a maximum value in DCI sizes corresponding to different waveforms.

Optionally, in a case that the size of the first DCI is smaller than the maximum value, the processor 1110 is further configured for:
padding zeros to the first DCI until the size of the first DCI reaches the maximum value.

Optionally, in a case that different waveforms or different waveform configurations correspond to different DCI formats, the processor 1110 is further configured for at least one of the following:
determining the size of the first DCI based on a waveform corresponding to the DCI format of the first DCI; and
determining the size of the first DCI based on a waveform configuration corresponding to the DCI format of the first DCI.

Optionally, in a case that the size of the first DCI or sizes of part of fields in the first DCI are determined by a second waveform, the processor 1110 is further configured for:
determining the second waveform according to a second preset rule; and
determining the size of the first DCI based on the second waveform; where
the second waveform is a waveform specified by the first DCI, or an actual waveform to which the terminal has switched.

Optionally, the processor 1110 is further configured for at least one of the following:
determining the second waveform based on a first field of the first DCI, where the first field is a pre-configured field for indicating the second waveform; and
blind-decoding the first DCI to determine the second waveform.

Optionally, the processor 1110 is further configured for:
in a case that the network-side device is configured with PI/2 binary phase shift keying BPSK modulation, determining, according to a third preset rule, whether to support dynamic waveform switching.

Optionally, the processor 1110 is further configured for at least one of the following:
determining not to support dynamic waveform switching;
in a case that the network-side device is further configured with demodulation reference signal uplink transform precoding dmrs-UplinkTransformPrecoding, determining to support dynamic waveform switching; and
in a case that the network-side device is further configured with dmrs-UplinkTransformPrecoding, determining not to support dynamic waveform switching.

Optionally, in a case that the terminal determines to support dynamic waveform switching, the radio frequency unit 1101 is further configured for:
in a case that a waveform of the first PUSCH is a discrete Fourier transform-s-orthogonal frequency division multiplexing DFT-s-OFDM waveform, transmitting the first PUSCH using the PI/2 BPSK or a low peak-to-average power ratio PAPR DMRS.

On the other hand, the radio frequency unit 1101 is configured to receive first configuration information from a network-side device, where the first configuration information is used to configure PI/2 binary phase shift keying BPSK modulation; and
the processor 1110 is configured to determine, according to a preset rule, whether to support dynamic waveform switching.

Optionally, the processor 1110 is further configured for at least one of the following:
determining not to support dynamic waveform switching;
in a case that the network-side device is further configured with dmrs-UplinkTransformPrecoding, determining to support dynamic waveform switching; and
in a case that the network-side device is further configured with dmrs-UplinkTransformPrecoding, determining not to support dynamic waveform switching.

Optionally, the radio frequency unit 1101 is further configured for: in a case that a waveform of the first PUSCH is a discrete Fourier transform-s-orthogonal frequency division multiplexing DFT-s-OFDM waveform, transmitting, by the terminal, the first PUSCH using the PI/2 BPSK or a low peak-to-average power ratio PAPR DMRS.

In summary, embodiments of this application propose various methods related to supporting dynamic waveform switching, making dynamic waveform switching possible, thereby improving the efficiency of uplink power usage in the system.

An embodiment of this application further provides a network-side device, including a processor and a communication interface, where the communication interface is used to transmit a first DCI to a terminal, where the first DCI is used to schedule a first PUSCH, and the terminal is a terminal with dynamic waveform switching capability or a terminal with dynamic waveform switching capability enabled; and the processor is configured to determine a reception position of the first PUSCH according to a first preset rule. This network-side device embodiment corresponds to the foregoing uplink receiving determining method embodiment. All processes and implementations in the foregoing method embodiment are applicable to this network-side device embodiment, with the same technical effect achieved.

An embodiment of this application further provides a network-side device, including a processor and a communication interface, where the communication interface is used to transmit first configuration information to a terminal, the first configuration information is used to configure PI/2 binary phase shift keying BPSK modulation, and the terminal is a terminal with dynamic waveform switching capability or a terminal with dynamic waveform switching capability enabled; and the processor is configured to determine, according to a preset rule, whether the terminal supports dynamic waveform switching. This network-side device embodiment corresponds to the foregoing network-side dynamic waveform switching determining method embodiment. All processes and implementations in the foregoing method embodiment are applicable to this network-side device embodiment, with the same technical effect achieved.

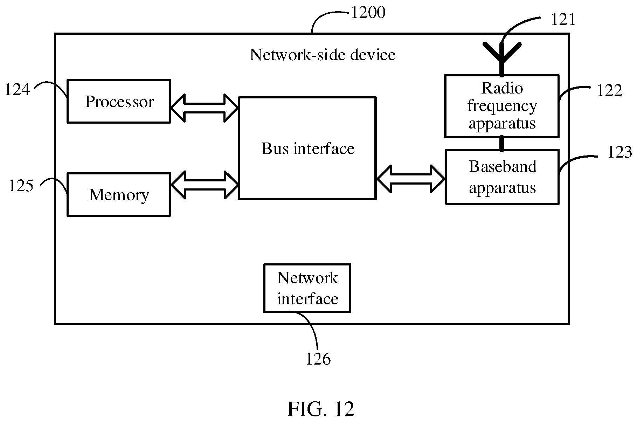

Specifically, an embodiment of this application further provides a network-side device. As shown in FIG. 12, the network-side device 1200 includes an antenna 121, a radio frequency apparatus 122, a baseband apparatus 123, a processor 124, and a memory 125. The antenna 121 is connected to the radio frequency apparatus 122. In uplink, the radio frequency apparatus 122 receives information through the antenna 121, and transmits the received information to the baseband apparatus 123 for processing. In downlink, the baseband apparatus 123 processes to-be-transmit information, and transmits the information to the radio frequency apparatus 122; and the radio frequency apparatus 122 processes the received information and then transmits the information out through the antenna 121.

The method executed by the network-side device in the aforesaid embodiments may be implemented on the baseband apparatus 123. The baseband apparatus 123 includes a baseband processor.

The baseband apparatus 123 may include, for example, at least one baseband board, where a plurality of chips are disposed on the baseband board. As shown in FIG. 12, one of the chips is, for example, a baseband processor, and connected to the memory 125 through a bus interface, to invoke the program in the memory 125 to perform the operations of the network device shown in the foregoing method embodiment.

The network-side device further includes a network interface 126, where the interface is, for example, a common public radio interface (Common Public Radio Interface, CPRI).

Specifically, the network-side device 1200 in this embodiment of this application further includes: an instruction or program stored in the memory 125 and executable on the processor 124. The processor 124 invokes the instruction or program in the memory 125 to execute the method executed by the modules shown in FIG. 7 or FIG. 9, with the same technical effects achieved. To avoid repetition, details are not described herein again.

An embodiment of this application further provides a readable storage medium, where a program or instruction is stored in the readable storage medium. When the program or instruction is executed by a processor, the processes of the foregoing DCI parsing method embodiment can be implemented, or the processes of the foregoing terminal-side dynamic waveform switching determining method embodiment are implemented, or the processes of the foregoing uplink receiving determining method embodiment are implemented, or the processes of the foregoing network-side dynamic waveform switching determining method embodiment are implemented, with the same technical effects achieved. To avoid repetition, details are not repeated herein.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instruction to implement the processes of the foregoing DCI parsing method embodiment, or to implement the processes of the foregoing terminal-side dynamic waveform switching determining method embodiment, or to implement the processes of the foregoing uplink receiving determining method embodiment, or to implement the processes of the foregoing network-side dynamic waveform switching determining method embodiment, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium. When the computer program/program product is executed by at least one processor, the processes of the foregoing DCI parsing method embodiment can be implemented, or the processes of the foregoing terminal-side dynamic waveform switching determining method embodiment can be implemented, or the processes of the foregoing uplink receiving determining method embodiment can be implemented, or the processes of the foregoing network-side dynamic waveform switching determining method embodiment can be implemented, with the same technical effects achieved. To avoid repetition, details are not repeated herein.

An embodiment of this application further provides a communication system including a terminal and a network-side device. The terminal may be configured to execute the steps of the DCI parsing method described above, or to execute the steps of the terminal-side dynamic waveform switching determining method described above, and the network-side device may be configured to execute the steps of the uplink receiving determining method described above, or to execute the steps of the network-side dynamic waveform switching determining method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A downlink control information DCI parsing method, comprising:
receiving, by a terminal, a first DCI from a network-side device, wherein the first DCI is used to schedule a first physical uplink shared channel PUSCH, and the terminal is a terminal with dynamic waveform switching capability or a terminal with dynamic waveform switching capability enabled;
parsing, by the terminal, the first DCI according to a first preset rule; and
determining, by the terminal, a transmission position of the first PUSCH based on a parsing result of the first DCI.

2. The method according to claim 1, wherein the first preset rule comprises at least one of the following:
a rule corresponding to a waveform configured by radio resource control RRC;
a rule corresponding to a waveform used by the first PUSCH;
a rule corresponding to a waveform used by a second PUSCH, wherein the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

3. The method according to claim 1 or 2, wherein the parsing, by the terminal, the first DCI comprises at least one of the following:
determining, by the terminal, a size of the first DCI;
in a case that a transmission mode of the first PUSCH is codebook-based transmission, determining, by the terminal, a table corresponding to the first DCI and used for indicating a transmitted precoding matrix indicator TPMI or the number of antenna ports;
determining, by the terminal, a size of a phase tracking reference signal-demodulation reference signal PTRS-DMRS association field in the first DCI; and
determining, by the terminal, a size of a DMRS sequence initialization field in the first DCI.

4. The method according to claim 3, wherein in a case that a DCI size does not change with waveform switching, the determining, by the terminal, a size of the first DCI comprises at least one of the following:
determining, by the terminal, the size of the first DCI based on a waveform configured by RRC;
determining, by the terminal, the size of the first DCI based on a waveform used by the first PUSCH; and
determining, by the terminal, the size of the first DCI based on a waveform used by the second PUSCH, wherein the second PUSCH is a PUSCH before scheduling of the first DCI;

5. The method according to claim 3, wherein in a case that a DCI size does not change with waveform switching, the determining, by the terminal, a size of the first DCI comprises:
determining, by the terminal, the size of the first DCI based on a maximum value in DCI sizes corresponding to different waveforms.

6. The method according to claim 5, wherein in a case that the size of the first DCI is smaller than the maximum value, the method further comprises:
padding, by the terminal, zeros to the first DCI until the size of the first DCI reaches the maximum value.

7. The method according to claim 3, wherein in a case that different waveforms or different waveform configurations correspond to different DCI formats, the determining, by the terminal, a size of the first DCI comprises at least one of the following:
determining, by the terminal, the size of the first DCI based on a waveform corresponding to the DCI format of the first DCI; and
determining, by the terminal, the size of the first DCI based on a waveform configuration corresponding to the DCI format of the first DCI.

8. The method according to claim 3, wherein in a case that the size of the first DCI or sizes of part of fields in the first DCI are determined by a second waveform, the determining, by the terminal, a size of the first DCI comprises:
determining, by the terminal, the second waveform according to a second preset rule; and
determining, by the terminal, the size of the first DCI based on the second waveform; wherein
the second waveform is a waveform specified by the first DCI, or an actual waveform to which the terminal has switched.

9. The method according to claim 8, wherein the determining, by the terminal, the second waveform according to a second preset rule comprises at least one of the following:
determining, by the terminal, the second waveform based on a first field of the first DCI, wherein the first field is a pre-configured field for indicating the second waveform; and
blind-decoding, by the terminal, the first DCI to determine the second waveform.

10. The method according to claim 1, further comprising:
in a case that the network-side device is configured with PI/2 binary phase shift keying BPSK modulation, determining, by the terminal according to a third preset rule, whether to support dynamic waveform switching.

11. The method according to claim 10, wherein the determining, by the terminal according to a third preset rule, whether to support dynamic waveform switching comprises at least one of the following:
determining, by the terminal, not to support dynamic waveform switching;
in a case that the network-side device is further configured with demodulation reference signal uplink transform precoding dmrs-UplinkTransformPrecoding, determining, by the terminal, to support dynamic waveform switching; and
in a case that the network-side device is further configured with dmrs-UplinkTransformPrecoding, determining, by the terminal, not to support dynamic waveform switching.

12. The method according to claim 10, wherein in a case that the terminal determines to support dynamic waveform switching, the method further comprises:
in a case that a waveform of the first PUSCH is a discrete Fourier transform-s-orthogonal frequency division multiplexing DFT-s-OFDM waveform, transmitting, by the terminal, the first PUSCH using the PI/2 BPSK or a low peak-to-average power ratio PAPR DMRS.

13. A dynamic waveform switching determining method, comprising:
receiving, by a terminal, first configuration information from a network-side device, wherein the first configuration information is used to configure PI/2 binary phase shift keying BPSK modulation, and the terminal is a terminal with dynamic waveform switching capability or a terminal with dynamic waveform switching capability enabled; and
determining, by the terminal according to a preset rule, whether to support dynamic waveform switching.

14. The method according to claim 13, wherein the determining, by the terminal according to a preset rule, whether to support dynamic waveform switching comprises at least one of the following:
determining, by the terminal, not to support dynamic waveform switching;
in a case that the network-side device is further configured with dmrs-UplinkTransformPrecoding, determining, by the terminal, to support dynamic waveform switching; and
in a case that the network-side device is further configured with dmrs-UplinkTransformPrecoding, determining, by the terminal, not to support dynamic waveform switching.

15. The method according to claim 13, wherein in a case that the terminal determines to support dynamic waveform switching, the method further comprises:
in a case that a waveform of the first PUSCH is a discrete Fourier transform-s-orthogonal frequency division multiplexing DFT-s-OFDM waveform, transmitting, by the terminal, the first PUSCH using the PI/2 BPSK or a low peak-to-average power ratio PAPR DMRS.

16. An uplink receiving determining method, comprising:
transmitting, by a network-side device, a first DCI to a terminal, wherein the first DCI is used to schedule a first PUSCH, and the terminal is a terminal with dynamic waveform switching capability or a terminal with dynamic waveform switching capability enabled; and
determining, by the network-side device, a reception position of the first PUSCH according to a first preset rule.

17. The method according to claim 16, wherein the first preset rule comprises at least one of the following:
a rule corresponding to a waveform configured by radio resource control RRC;
a rule corresponding to a waveform used by the first PUSCH;
a rule corresponding to a waveform used by a second PUSCH, wherein the second PUSCH is a PUSCH before scheduling of the first DCI;
a rule corresponding to a first waveform in a case that a DCI format of the first DCI is associated with the first waveform; and
a rule corresponding to a first waveform configuration in a case that the DCI format of the first DCI is associated with the first waveform configuration.

18. The method according to claim 16, further comprising:
transmitting, by the network-side device, first configuration information to the terminal, wherein the first configuration information is used to configure PI/2 binary phase shift keying BPSK modulation; and
determining, by the network-side device according to a third preset rule, whether the terminal supports dynamic waveform switching.

19. The method according to claim 18, wherein the determining, by the network-side device according to a third preset rule, whether the terminal supports dynamic waveform switching comprises at least one of the following:
determining, by the network-side device, that the terminal does not support dynamic waveform switching;
in a case that the network-side device is further configured with demodulation reference signal uplink transform precoding dmrs-UplinkTransformPrecoding, determining, by the network-side device, that the terminal supports dynamic waveform switching; and
in a case that the network-side device is further configured with dmrs-UplinkTransformPrecoding, determining, by the network-side device, that the terminal does not support dynamic waveform switching.

20. A dynamic waveform switching determining method, comprising:
transmitting, by a network-side device, first configuration information to a terminal, wherein the first configuration information is used to configure PI/2 binary phase shift keying BPSK modulation, and the terminal is a terminal with dynamic waveform switching capability or a terminal with dynamic waveform switching capability enabled; and
determining, by the network-side device according to a preset rule, whether the terminal supports dynamic waveform switching.

21. The method according to claim 20, wherein the determining, by the network-side device according to a preset rule, whether the terminal supports dynamic waveform switching comprises at least one of the following:
determining, by the network-side device, that the terminal does not support dynamic waveform switching;
in a case that the network-side device is further configured with demodulation reference signal uplink transform precoding dmrs-UplinkTransformPrecoding, determining, by the network-side device, that the terminal supports dynamic waveform switching; and
in a case that the network-side device is further configured with dmrs-UplinkTransformPrecoding, determining, by the network-side device, that the terminal does not support dynamic waveform switching.

22. A DCI parsing apparatus, applied to a terminal, wherein the terminal is a terminal with dynamic waveform switching capability or a terminal with dynamic waveform switching capability enabled, the apparatus comprising:
a receiving module, configured to receive a first DCI from a network-side device, wherein the first DCI is used to schedule a first physical uplink shared channel PUSCH;
a parsing module, configured to parse the first DCI according to a first preset rule; and
a first determining module, configured to determine a transmission position of the first PUSCH based on a parsing result of the first DCI.

23. A dynamic waveform switching determining apparatus, applied to a terminal, wherein the terminal is a terminal with dynamic waveform switching capability or a terminal with dynamic waveform switching capability enabled, the apparatus comprising:
a receiving module, configured to receive first configuration information from a network-side device, wherein the first configuration information is used to configure PI/2 binary phase shift keying BPSK modulation; and
a determining module, configured to determine, according to a preset rule, whether to support dynamic waveform switching.

24. An uplink receiving determining apparatus, applied to network-side device, the apparatus comprising:
a first transmitting module, configured to transmit a first DCI to a terminal, wherein the first DCI is used to schedule a first PUSCH, and the terminal is a terminal with dynamic waveform switching capability or a terminal with dynamic waveform switching capability enabled; and
a first determining module, configured to determine, according to a first preset rule, a reception position of the first PUSCH.

25. A dynamic waveform switching determining apparatus, applied to a network-side device, the apparatus comprising:
a transmitting module, configured to transmit first configuration information to a terminal, wherein the first configuration information is used to configure PI/2 binary phase shift keying BPSK modulation, and the terminal is a terminal with dynamic waveform switching capability or a terminal with dynamic waveform switching capability enabled; and
a determining module, configured to determine, according to a preset rule, whether the terminal supports dynamic waveform switching.

26. A terminal, comprising a processor and a memory, wherein the memory stores a program or instruction capable of running on the processor, and when the program or instruction is executed by the processor, the steps of the DCI parsing method according to any one of claims 1 to 12 are implemented, or the steps of the dynamic waveform switching determining method according to any one of claims 13 to 15 are implemented.

27. A network-side device, comprising a processor and a memory, wherein the memory stores a program or instruction capable of running on the processor, and when the program or instruction is executed by the processor, the steps of the uplink receiving determining method according to any one of claims 16 to 19 are implemented, or the steps of the dynamic waveform switching determining method according to claim 20 or 21 are implemented.

28. A readable storage medium, wherein the readable storage medium stores a program or instruction, and when the program or instruction is executed by a processor, the steps of the DCI parsing method according to any one of claims 1 to 12 are implemented, or the steps of the dynamic waveform switching determining method according to any one of claims 13 to 15 are implemented, or the steps of the uplink receiving determining method according to any one of claims 16 to 19 are implemented, or the steps of the dynamic waveform switching determining method according to claim 20 or 21 are implemented.
